# EUROPEAN PATENT APPLICATION

(11) **EP 4 498 448 A1**
(43) Date of publication of application: **29.01.2025**
(21) Application number: 23774258.0
(22) Date of filing: 03.02.2023
(51) Int. Cl.: H01M 4/38, C01B 33/113, H01M 4/36, H01M 4/48, H01M 4/58, H01M 4/587

(54) **PARTICLES, METHOD FOR MANUFACTURING PARTICLES, METHOD FOR MANUFACTURING NEGATIVE ELECTRODE, AND METHOD FOR MANUFACTURING SECONDARY BATTERY**

(30) Priority: 22.03.2022 JP 2022045580; 22.03.2022 JP 2022045581
(71) Applicant: Mitsubishi Chemical Corporation, Tokyo 100-8251 (JP)
(72) Inventor: SUGIYAMA, Yusuke, Tokyo 100-8251 (JP); NAKANISHI, Takahiro, Tokyo 100-8251 (JP); MARU, Naoto, Tokyo 100-8251 (JP)
(74) Representative: Vossius & Partner Patentanwälte Rechtsanwälte mbB
(86) International application number: PCT/JP2023/003531
(87) International publication number: WO 2023/181659

(57) **Abstract**

Particles comprising graphite (A) and a particle (B) containing at least one selected from the group consisting of a tantalum compound and a cerium compound, wherein the particle (B) is encapsulated in the graphite (A). Particles comprising a particle (B) containing a cerium compound, wherein the particle (B) is a particle (B1) containing a silicon element, and the particle (B1) has a surface coated with a cerium compound.

## Description

### Technical Field

The present invention relates to particles, a method for producing particles, a method for producing a negative electrode, and a method for manufacturing a secondary battery.

### Background Art

There has been an increasing demand for high-capacity secondary batteries with reductions in the sizes of electronic devices. Particular attention has been placed on secondary batteries in particular, lithium-ion secondary batteries that have a higher energy density than nickelcadmium batteries or nickel-hydrogen batteries and are excellent in terms of charge-discharge characteristic. As a lithium ion secondary battery, a nonaqueous lithium secondary battery that includes positive and negative electrodes capable of occluding and releasing lithium ions and a nonaqueous electrolyte solution that contains a lithium salt, such as LiPF₆ or LiBF₄, dissolved therein has been developed and used.

Improving the performance of lithium ion secondary batteries has been widely studied, but in recent years, there has been a demand for even higher performance of lithium ion secondary batteries. For example, Patent Literature 1 proposes a negative electrode material of composite graphite particles containing silicon particles.

### Citation List

### Patent Literature

[Patent Literature 1] WO 2015/147123 A

### Summary of Invention

### Technical Problem

In the negative electrode material disclosed in Patent Literature 1, the silicon particles are not coated or otherwise treated, and side reactions with the electrolyte occur, so the cycle characteristics of the secondary battery cannot be said to be sufficient.

As described above, various types of negative electrode materials have been studied, but no negative electrode material that can sufficiently improve the cycle characteristics of secondary batteries has been proposed.

An object of the present invention is to provide particles that can provide excellent cycle characteristics as a negative material for secondary batteries. Another object of the present invention is to provide a method for producing particles for obtaining the particles.

### Solution to Problem

The present inventors have found that the cycle characteristics of a secondary battery can be improved by using particles containing a particle (B) containing a tantalum oxide and/or a cerium compound and encapsulated in graphite, or using particles containing a particle (B) which is a particle (B1) containing a silicon element and having a surface coated with a cerium compound, leading to the present invention.

That is, the gist of the present invention is as follows.
[1] Particles comprising graphite (A) and a particle (B) containing at least one selected from the group consisting of a tantalum compound and a cerium compound,
   wherein the particle (B) is encapsulated in the graphite (A).
[2] The particles according to [1], wherein the graphite (A) has a Raman R value of 0.1 to 0.7.
[3] The particles according to [1] or [2], wherein the particle (B) further contains a silicon element.
[4] The particles according to [2], wherein the particle (B) is a particle (B1) containing a silicon element having a surface coated with at least one selected from the group consisting of a tantalum compound and a cerium compound.
[5] The particles according to any one of [1] to [4], wherein the tantalum compound contains tantalum pentoxide.
[6] The particles according to any one of [1] to [5], wherein the cerium compound contains cerium (IV) oxide.
[7] The particles according to any one of [1] to [6], wherein the particle (B) have a volume-average particle dsize of 0.2 µm to 0.8 µm.
[8] The particles according to any one of [1] to [7], having a carbonaceous material on the surface.
[9] The particles according to any one of [1] to [8], wherein the content of the graphite (A) is 60% by mass to 95% by mass, and the content of the particle (B) is 5% by mass to 40% by mass in the total of 100% by mass of the graphite (A) and the particle (B).
[10] A method for producing particles, comprising a step of encapsulating a particle (B) in graphite (A), the particle (B) containing at least one selected from the group consisting of a tantalum compound and a cerium compound.
[11] The method for producing particles according to [10], wherein the graphite (A) has a Raman R value of 0.1 to 0.7.
[12] The method for producing particles according to [10] or [11], further comprising a step of coating a surface of a particle (B1) containing a silicon element with at least one selected from the group consisting of a tantalum compound and a cerium compound.
[13] Particles comprising a particle (B) containing a cerium compound,
   wherein the particle (B) is a particle (B1) containing a silicon element, and the particle (B1) has a surface coated with a cerium compound.
[14] The particles according to [13], wherein the particle (B) has a volume-average particle dsize of 0.2 µm to 0.8 µm.
[15] A method for producing a negative electrode, having a step of applying the particles according to any one of [1] to [9] and [13] to [14] onto a current collector.
[16] A method for manufacturing a secondary battery including a positive electrode, a negative electrode, and an electrolyte,
   wherein the negative electrode is obtained by the producing method according to [15].

### Advantageous Effects of Invention

By using the particles of the present invention as an active material for a negative electrode of a secondary battery, it is possible to provide a secondary battery having excellent cycle characteristics.

According to the method for producing particles of the present invention, the particles can be produced. Description of Embodiments

The present invention will be described in detail below. The present invention is not limited by the following description. Various modifications may be made within the scope of the present invention.

In the present invention, when a range is expressed using two numerical values or two physical properties with "to" interposed therebetween, the two numerical values or two physical properties before and after "to" are included in the range.

### [Particles]

In one embodiment, the particles of the present invention comprises graphite (A) and a particle (B) containing at least one selected from the group consisting of a tantalum compound and a cerium compound(hereinafter sometimes simply referred to as "particle (B)"), in which the particle (B) is encapsulated in the graphite (A).

In another embodiment of the present invention, particles comprises a particle (B) containing a cerium compound, wherein the particle (B) is a particle (B1) containing a silicon element, and the particle (B1) has a surface coated with a cerium compound. Hereinafter, the particles may be referred to as "second particles of the present invention".

Since the particle (B) is encapsulated in the graphite (A) or the surface of the particle (B1) containing a silicon element is coated with a cerium compound, the stability against the electrolyte is improved, and therefore the cycle characteristics of the secondary battery can be improved.

Regarding the particle (B1) containing a silicon element and regarding the cerium compound of the second particles of the present invention, following description of the particle (B1) containing a silicon element and description of the cerium compound in the particles of the present invention are applied similarly. Further, since the second particles of the present invention are one embodiment of the particle (B) in the particles of the present invention described below, the following description is applied similarly.

The particles of the present invention may include the graphite (A) and the particle (B1) containing a silicon element and having a surface coated with a cerium compound, which is the second particles of the present invention. Hereinafter, these particles may be referred to as "third particles of the present invention". Since the third particles of the present invention are one embodiment of the particles of the present invention, the following description is applied similarly.

### (Graphite (A))

As the graphite (A), either natural graphite or artificial graphite may be used, but natural graphite is preferable because of its high capacity. As the graphite (A), those containg a low amount of impurities are preferable. The graphite (A) is preferably used after being subjected to a purification treatment, if necessary.

Examples of the natural graphite include arthy graphite, scale-like graphite, flake-like graphite, and the like. Among these natural graphites, scale-like graphite and flake-like graphite are preferable, and flake-like graphite is more preferable, because they have a high degree of graphitization and a low amount of impurities.

Examples of the artificial graphite include those obtained by graphitizing organic substances such as coal tar pitch, coal-based heavy oil, atmospheric residual oil, petroleum-based heavy oil, aromatic hydrocarbons, nitrogen-containing cyclic compounds, sulfur-containing cyclic compounds, polyphenylene, polyvinyl chloride, polyvinyl alcohol, polyacrylonitrile, polyvinyl butyral, natural polymers, polyphenylene sulfide, polyphenylene oxide, furfuryl alcohol resin, phenol-formaldehyde resin, imide resin, and the like by heating at 2500°C or higher.

### (Physical properties of graphite (A))

The volume-average particle size (d50) of the graphite (A) is preferably 1µm or more, more preferably 3um or more, and even more preferably 5um or more, since the specific surface area does not become too large and the activity against the electrolyte can be suppressed. The volume-average particle size (d50) of the graphite (A) is preferably 120µm or less, more preferably 100µm or less, and even more preferably 90um or less, since this can suppress the generation of streaks and unevenness during electrode plate production.

In this specification, the volume-average particle size (d50) is the value of the volume-based median diameter measured by a laser diffraction/scattering particle size distribution analyzer.

Specifically, 0.01 g of a sample is suspended in 10 mL of a 0.2% by mass aqueous solution of polyoxyethylene sorbitan monolaurate, which is a surfactant, and introduced into a laser diffraction/scattering particle size distribution analyzer. After irradiating a 28kHz ultrasonic wave with an output of 60 W for 1 minute, the volume-based median diameter in the measuring device is measured.

The d90 of the graphite (A) is preferably 1.5µm or more, more preferably 4µm or more, and even more preferably 6µm or more, since it can efficiently encapsulate a particle (B). The d90 of the graphite (A) is preferably 150µm or less, more preferably 120µm or less, and even more preferably 100µm or less, since it can suppress the generation of coarse particles when encapsulating a particle (B).

In the present invention, the d90 is the value of the particle size corresponding to cumulative 90% from the small particle side in the particle size distribution obtained by measuring the volume-average particle size.

The long-axis length of the graphite (A) is preferably 5µm or more, more preferably 10µm or more, and even more preferably 15 µm or more, since it can have a high capacity. The long-axis length of the graphite (A) is preferably 100µm or less, more preferably 90um or less, and even more preferably 80um or less, since it can have excellent acceptability for lithium ions.

In this specification, the long-axis length is the longest diameter of a particle when observed three-dimensionally using a scanning electron microscope, and is the average value of the long-axes length of any 20 particles.

The short-axis length of the graphite (A) is preferably 0.9um or more, more preferably 1.0µm or more, and even more preferably 1.2µm or more, since it can have a high capacity. The short-axis length of the graphite (A) is preferably 3µm or less, more preferably 2um or less, and even more preferably 1.5µm or less, since it can have excellent acceptability for lithium ions.

In this specification, the short-axis length is the shortest diameter of a particle when observed three-dimensionally using a scanning electron microscope, and is the average value of the short axes of any 20 particles.

The aspect ratio of the graphite (A) is preferably 2.1 or more, more preferably 2.3 or more, and even more preferably 2.5 or more, since it can have a high capacity. The aspect ratio of the graphite (A) is preferably 10 or less, more preferably 9 or less, and even more preferably 8 or less, since it can have excellent acceptability for lithium ions.

In this specification, the aspect ratio is calculated as X/Y using the longest diameter X of the particle when observed three-dimensionally using a scanning electron microscope and the shortest diameter Y of the diameters perpendicular to the longest diameter X. This is the average value of the aspect ratios of any 20 particles.

The specific surface area (SA) of the graphite (A) is preferably 1m²/g or more, more preferably 2m²/g or more, and even more preferably 3m²/g or more, since battery output is improved by increasing the lithium ion storage capacity of the particles. The specific surface area (SA) of the graphite (A) is preferably 40m²/g or less, more preferably 35m²/g or less, and even more preferably 30m²/g or less, since it can suppress a decrease in battery capacity due to an increase in the irreversible capacity of the particles.

In this specification, the specific surface area (SA) is a value measured by the BET method.

Specifically, using a specific surface area measurement device, a sample is heated it at 150°C under nitrogen flow for pretreatment, then cooled to liquid nitrogen temperature. Using a nitrogen-helium mixed gas that has been precisely adjusted so that the value of the relative pressure of nitrogen to atmospheric pressure is 0.3, the measurement is performed by the nitrogen adsorption BET one-point method using the gas flow method.

The tap density of the graphite (A) is preferably 0.1g/cm³ or more, more preferably 0.13g/cm³ or more, and even more preferably 0.15g/cm³ or more, because process defects such as streaking during electrode plate production can be suppressed, and filling properties are improved, making it easier to form a high-density negative electrode sheet with good rollability, and when used as electrode body, the degree of curvature of the movement path of lithium ions becomes smaller, and the shape of the voids between particles is adjusted, allowing smooth movement of the electrolyte and improving rapid charge/discharge characteristics. The tap density of the graphite (A) is preferably 1.0 g/cm³ or less, more preferably 0.8 g/cm³ or less, and even more preferably 0.6 g/cm³ or less, because the particles do not become too hard due to the appropriate space on the surface and inside of the particles and have excellent electrode pressability, as well as excellent rapid charge/discharge characteristics and low-temperature input/output characteristics.

In the present invention, the tap density is defined as the density determined using a powder density gage by dropping the particles into a cylindrical tap cell having a diameter of 1.5cm and a volume of 20cm³ through a sieve having an opening of 300um to fully fill the cell with the particles, tapping the cell 1000 times with a stroke length of 10mm, and calculating the density of the sample from the volume and mass of the sample.

The Raman R value of the graphite (A) is preferably 0.1 or more, more preferably 0.2 or more, and even more preferably 0.3 or more, since particles having a wider reaction surface can react with Li more efficiently. The Raman R value of the graphite (A) is preferably 0.7 or less, more preferably 0.6 or less, and even more preferably 0.5 or less, since the higher the graphiticity, the higher the conductivity, which is suitable for batteries.

In this specification, the Raman R value is defined as the intensity ratio (IB/IA) calculated by measuring the intensity IA of the peak PA that occurs around 1580cm⁻¹ and the intensity IB of the peak PB that occurs around 1360cm⁻¹ in a Raman spectrum obtained by Raman spectroscopy.

In this specification, the expression "around 1580cm⁻¹" refers to a range of 1580 to 1620cm⁻¹, and the expression "around 1360cm⁻¹" refers to a range of 1350 to 1370cm⁻¹.

A Raman spectrum can be measured with a Raman spectrometer. Specifically, the sample that is to be measured is dropped into a measurement cell by gravity in order to charge the sample into the cell. The measurement is conducted while the inside of the measurement cell is irradiated with an argon ion laser beam and the measurement cell is rotated in a plane perpendicular to the laser beam. The measurement conditions are as follows.
Argon ion laser light wavelength: 514.5nm
Laser power on sample: 25mW
Resolution: 4cm⁻¹
Measurement range: 1100cm⁻¹ to 1730cm⁻¹
Peak intensity measurement, peak half-width measurement: background processing, smoothing processing (5 points of convolution using simple average)

The d002 value of the graphite (A) is preferably 3.37 Å or less, and more preferably 3.36 Å or less, because graphite is highly crystalline and has sufficient charge/discharge capacity.

The Lc of the graphite (A) is preferably 900 Å or more, and more preferably 950 Å or more, since graphite is highly crystalline and has sufficient charge/discharge capacity.

In this specification, the d002 value is a value of an interplanar spacing of lattice planes (002 planes) measured by X-ray diffractometry in accordance with the method of the Japan Society for the Promotion of Science. Lc is a value of a crystallite size measured by X-ray diffractometry in accordance with the method of the Japan Society for the Promotion of Science. The measurement conditions for X-ray diffraction are as follows.
X-ray: CuKα ray
Measurement range: 20°≦2θ≦30°
Step angle: 0.013°
Sample preparation: fill the sample plate recess having a depth of 0.2 mm with powder sample to create a flat sample surface.

### (Particle (B))

The particle (B) contains at least one selected from the group consisting of a tantalum compound and a cerium compound. By containing at least one kind selected from the group consisting of a tantalum compound and a cerium compound having a large ionic radius, the cycle characteristics of the battery can be improved, since the particle (B) secures a diffusion path for lithium ions and improves stability against the electrolyte.

Examples of the tantalum compound include tantalum oxides such as tantalum pentoxide, tantalum dioxide, and the like. These tantalum compounds may be used alone or in combination of two or more. Among these tantalum compounds, tantalum oxide is preferred, and tantalum pentoxide is more preferred because of its excellent stability.

The crystalline state of the tantalum compound may be single crystal, polycrystal, or amorphous. The tantalum compound is preferably polycrystalline or amorphous because it is easy to reduce the particle size and has excellent rate characteristics.

Examples of the cerium compound include cerium oxides such as cerium (IV) oxide, cerium (III) oxide, and the like. These cerium compounds may be used alone or in combination of two or more. Among these cerium compounds, cerium oxide is preferred, and cerium (IV) oxide is more preferred because of its excellent stability.

The crystalline state of the cerium compound may be single crystal, polycrystal, or amorphous. The cerium compound is preferably polycrystalline or amorphous because it is easy to reduce the particle size and has excellent rate characteristics.

The particle (B) may contain one or more tantalum compounds and one or more cerium compounds.

The particle (B) may contain metal elements other than tantalum and/or cerium, as long as the amount does not inhibit the functions of tantalum and/or cerium.

Examples of the other metal elements include aluminum, calcium, magnesium, niobium, europium, hafnium, and the like. The content of the other metal elements is preferably 5 mol% or less with respect to 100 mol% of tantalum and/or cerium.

It is preferable that the particle (B) contains a silicon element because it can have a high capacity.

The particle (B) is preferably a particle that includes a tantalum compound and/or a cerium compound on the surface of the particle (B1) containing a silicon element, since the stability against the electrolyte is improved.

### (Particle (B1) containing a silicon element)

The particle (B1) containing a silicon element may be any particle containg a silicon element (Si). Si in the particle (B1) may be a simple substance of Si or may be a Si compound.

The crystal state of the particle (B1) may be single crystal, polycrystal or amorphous. The particle (B1) is preferably polycrystalline or amorphous because it can easily be made to have a small particle size and have high rate characteristics.

Examples of the Si compound include Si oxide, Si nitride, Si carbide, and the like.

Specific Si compounds include SiOx, SiNx, SiCx, SiZxOy (Z=C, N), and the like, when expressed in the general formula. SiOx is preferred because it has a high capacity.

SiOx is obtained using silicon dioxide (SiO₂) and metal Si as raw materials.

x is preferably larger than 0, more preferably 0.1 or more, even more preferably 0.5 or more, and particularly preferably 0.8 or more, since it can extend the life of the secondary battery. x is preferably 2 or less, more preferably 1.8 or less, even more preferably 1.5 or less, and particularly preferably 1.2 or less, since it is possible to have high capacity.

In this specification, the value of x in SiOx is a calculated value of the ratio of the amount of oxygen to silicon. The amount of oxygen in SiOx is measured by an impulse furnace heating extraction-IR detection method under an inert gas atmosphere. The amount of silicon in SiOx is measured by ICP emission spectroscopy.

SiOx has a larger theoretical capacity than the graphite (A). Amorphous Si or nano-sized Si crystals allow alkali ions such as lithium ions to enter and exit easily, making it possible to obtain high capacity.

The oxygen content of the particle (B1) is preferably 0.01% by mass or more, more preferably 0.03% by mass or more, and even more preferably 0.05% by mass or more, based on 100% by mass of the particle (B1), since it can extend the life of the secondary battery. The oxygen content of the particle (B1) is preferably 50% by mass or less, more preferably 45% by mass or less, and even more preferably 40% by mass or less, since it can have a high capacity.

In the present specification, the oxygen content of the particle (B1) is a value obtained by measuring the amount of oxygen in the particle (B1) using an impulse furnace heating extraction-IR detection method under an inert gas atmosphere.

Regarding the oxygen distribution state within the particle (B1), oxygen may be present near the surface, oxygen may be present inside the particle, or oxygen may be present uniformly within the particle. Since the life of the secondary battery can be extended, it is preferable that oxygen in the particle (B1) exist near the surface.

When the particle (B1) have a crystal structure, the crystallite size is preferably 0.05 nm or more, more preferably 0.5 nm or more, and even more preferably 1 nm or more, since the battery output can be improved. The crystallite size of the particle (B1) is preferably 100 nm or less, more preferably 70 nm or less, and even more preferably 50 nm or less, since the life of the secondary battery can be extended.

In this specification, the crystallite size is a value determined by the Debye-Scherrer method from the diffraction peak attributed to the Si (111) plane centered around 2θ = 28.4° observed by X-ray wide-angle diffraction method.

As the particle (B1), commercially available ones may be used as they are, or mechanical energy treatment may be applied to adjust the particle size before use.

The particle (B1) may be produced by any known method. The particle (B1) is preferably produced by a method comprising heating a mixture of silicon dioxide powder and metal silicon powder to generate SiOx gas, cooling it to precipitate it, and then applying mechanical energy, since it is possible to obtain particles having excellent uniformity. Mechanical energy may be applied using a known method.

The particle (B) having a tantalum compound and/or a cerium compound on the surface of the particle (B1) containing a silicon element may be obtained by growing a tantalum compound and/or cerium compound on the surface of the particle (B1) by a chemical reaction, or attaching the tantalum compound and/or the cerium compound to the surface of the particle (B1) by applying physical energy. Since the surface of the particle (B1) containing a silicon element has excellent adhesion between the tantalum compound and/or the cerium compound, it is preferred that the tantalum compound and/or the cerium compound is attached to the surface of the particle (B1) containing a silicon element by impregnating the particle (B1) containing a silicon element in a solution containing a compound that is a raw material for the tantalum compound and/or the cerium compound, and coating the surface of the particle (B1) with the tantalum compound and/or the cerium compound.

That is, one embodiment of the method for producing particles of the present invention is a method including the step of coating at least a portion of the surface of the particle (B1) containing a silicon element with a tantalum compound and/or a cerium compound as described above.

A heat treatment may be performed after a tantalum compound and/or a cerium compound is attached to the surface of the particle (B1) containing a silicon element.

Regarding the second particles of the present invention, in which the surface of the particle (B1) containing a silicon element is coated with a cerium compound, the cerium compound may be grown on the surface of the particle (B1) by a chemical reaction, or the cerium compound may be attached to the surface of the particle (B1) by applying energy. Since the surface of the particle (B1) containing a silicon element has excellent adhesion between the cerium compound, it is preferred that the cerium compound is attached to the surface of the particle (B1) containing a silicon element by impregnating the particle (B1) containing a silicon element in a solution containing a compound that is a raw material for the cerium compound, and coating the surface of the particle (B1) with the cerium compound.

After the cerium compound is attached to the surface of the particle (B1) containing a silicon element, heat treatment may be performed.

(Physical properties and the like of the particle (B))

The content of a tantalum element and/or a cerium element in the particle (B) is preferably 1 atomic part or more, more preferably 3 atomic parts or more, and even more preferably 5 atomic parts or more, based on 100 atomic parts of silicon element, since it can suppress the reaction with the electrolytic solution. The content of a tantalum element and/or a cerium element in the particle (B) is preferably 25 atomic part or less, more preferably 20 atomic parts or less, and even more preferably 15 atomic parts or less, since the content of the particle (B1) containing a silicon element is relatively large, so that the particles of the present invention can have a high capacity.

In this specification, the content of a tantalum element and/or a cerium element the particle (B) is a value measured by embedding the particle (B) in indium metal and using an X-ray photoelectron spectrometer under the following conditions.
X-ray source: monochromatic Al-Kα
Output: 15kV to 225W
Band electron neutralization: Filament Current
   Filament bias
Charge balance: 0.43V, 1V, 4V
Pass energy: wide spectrum 160eV
   narrow spectrum 20eV
Measurement area: 700µm × 300µm
Removal angle: 90°
Energy correction Si: 2p = 103.5eV (SiO₂)

The volume-average particle size (d50) of the particle (B) is preferably 0.2µm or more, more preferably 0.3µm or more, and even more preferably 0.4µm or more, since the density of the active material layer can be increased. The volume-average particle size (d50) of the particle (B) is preferably 10µm or less, more preferably 3um or less, and even more preferably 0.8µm or less, since it has excellent lithium ion acceptability.

The maximum particle size dmax of the particle (B) is preferably 0.3 µm or more, more preferably 0.5 µm or more, and even more preferably 1 µm or more, since a high capacity can be obtained. The maximum particle size dmax of the particle (B) is preferably 20 µm or less, more preferably 5 µm or less, and even more preferably 2 µm or less, since the particle (B) that are insufficiently composited with the graphite (A) can be reduced.

In the method for measuring the volume-average particle size (d50) of the particle (B), the particles of the present invention are heated in the presence of oxygen to burn and remove the graphite (A), and the volume-average particle size (d50) of the resulting particle (B) may be measured using the measurement method described above. The maximum particle size dmax is the largest measured particle size of particles in the particle size distribution obtained when measuring d50.

The specific surface area (SA) of the particle (B) is preferably 0.5m²/g or more, more preferably 0.8m²/g or more, and even more preferably 1m²/g or more, since it has excellent lithium ion acceptability. The specific surface area (SA) of the particle (B) is preferably 120m²/g or less, more preferably 110m²/g or less, and even more preferably 100m²/g or less, since the battery output is improved.

### (Physical properties and the like of the particle (B) in the second particles of the present invention)

The content of a cerium element in the particle (B) containing a cerium compound in the second particle of the present invention is preferably 0.1 parts by mass or more, more preferably 0.4 parts by mass or more, and even more preferably 1 part by mass or more, based on 100 parts by mass of a silicon element, since the reaction with the electrolyte can be suppressed. The content of a cerium element in the particle (B) is preferably 10 parts by mass or less, more preferably 8 parts by mass or less, and even more preferably 5 parts by mass or less, since the content of the particle (B1) containing a silicon element is relatively large, so that the second particles of the present invention can have a high capacity.

The volume-average particle size (d50) of the particle (B) in the second particles of the present invention is preferably 0.2 µm or more, more preferably 0.3 µm or more, and even more preferably 0.4 µm or more, since the density of the active material layer can be increased. The volume-average particle size (d50) of the particle (B) is preferably 10 µm or less, more preferably 3 um or less, and even more preferably 0.8 µm or less, since it can have excellent lithium ion acceptability.

The maximum particle size dmax of the particle (B) in the second particles of the present invention is preferably 0.3 µm or more, more preferably 0.5 µm or more, and even more preferably 1 µm or more, since a high capacity can be obtained. The maximum particle size dmax of the particle (B) is preferably 20 µm or less, more preferably 5 µm or less, and even more preferably 2 µm or less, since the particle (B) that is insufficiently composited with the graphite (A) can be reduced.

The specific surface area (SA) of the particle (B) in the second particles of the present invention is preferably 0.5m²/g or more, more preferably 0.8m²/g or more, and even more preferably 1m² /g or more, since it can have excellent lithium ion acceptability. The specific surface area (SA) of the particle (B) is preferably 120m²/g or less, more preferably 110m²/g or less, and even more preferably 100m²/g or less, since the battery output can be improved.

### (Embodiment of the particles of the present invention)

In the particles of the present invention, since the particle (B) are encapsulated in the graphite (A), electrons can be efficiently provided to the particle (B).

Similarly, in the third particles of the present invention, from the viewpoint of efficient electron donation, it is preferable that the particle (B) is encapsulated in the graphite (A).

Furthermore, it is preferable for the particles of the present invention to have a carbonaceous material on the surface because the specific surface area can be reduced when the graphite (A) and the particle (B) described below are composited.

The carbonaceous material contained in the particles of the present invention will be described later.

The content of the graphite (A) in the particles of the present invention is preferably 60% by mass or more, more preferably 70% by mass or more, and even more preferably 80% by mass or more based on a total of 100% by mass of the graphite (A) and the particle (B), since it can be easy to composite the graphite (A) and the particle (B), which will be described later. The content of the graphite (A) in the particles of the present invention is preferably 95% by mass or less, more preferably 92% by mass or less, and even more preferably 90% by mass or less, since a high capacity can be obtained.

The content of the particle (B) in the particles of the present invention is preferably 5% by mass or more, more preferably 8% by mass or more, and even more preferably 10% by mass or more, based on a total of 100% by mass of the graphite (A) and the particle (B), since a high capacity can be obtained. The content of the particle (B) in the particles of the present invention is preferably 40% by mass or less, more preferably 30% by mass or less, and even more preferably 20% by mass or less, since it can be easy to composite the graphite (A) and the particle (B), which will be described later.

When the particles of the present invention contain a carbonaceous material, the content of the carbonaceous material is preferably 2 parts by mass or more, more preferably 5 parts by mass or more, and even more preferably 7 parts by mass or more, based on a total of 100 parts by mass of the graphite (A) and the particle (B), since the specific surface area of the particles of the present invention is reduced and the initial charge/discharge efficiency is improved. The content of the carbonaceous material is preferably 30 parts by mass or less, more preferably 25 parts by mass or less, and even more preferably 20 parts by mass or less, since a high capacity can be obtained.

In addition to the amorphous carbonaceous material and the graphitized material, the carbonaceous material may contain alloyable metal particles and carbon fine particles.

Examples of the shape of the carbon fine particles include granules, spheres, chains, needles, fibers, plates, scales, and the like.

Specific examples of carbon fine particles include fine coal powder, gas phase carbon powder, carbon black, Ketjen black, carbon nanofibers, and the like. These carbon fine particles may be used alone or in combination of two or more. Among these carbon fine particles, carbon black is preferred because it has excellent low-temperature input/output characteristics.

### (Physical properties of the particles of the present invention)

The volume average particle size (d50) of the particles of the present invention is preferably 1 µm or more, more preferably 4 um or more, and even more preferably 6 µm or more, since the specific surface area does not become too large and the activity against the electrolyte can be suppressed. The volume average particle size (d50) of the particles of the present invention is preferably 50 µm or less, more preferably 40 um or less, and even more preferably 30 um or less, since the generation of streaks and unevenness during electrode plate production can be suppressed.

The specific surface area (SA) of the particles of the present invention is preferably 0.1 m²/g or more, more preferably 0.7 m²/g or more, and even more preferably 1 m²/g or more, since the battery output can be improved by increasing the lithium ion storage capacity of the particles. The specific surface area (SA) of the particles of the present invention is preferably 40 m²/g or less, more preferably 35 m²/g or less, and even more preferably 30 m²/g or less, since the particles can suppress their activity against the electrolyte.

The tap density of the particles of the present invention is preferably 0.5 g/cm³ or more, more preferably 0.6 g/cm³ or more, and even more preferably 0.8 g/cm³ or more, since the shape of the voids between the particles is adjusted, allowing smooth movement of the electrolyte and improving rapid charging/discharging characteristics. The tap density of the particles of the present invention is preferably 2.2 g/cm ³ or less, more preferably 2.0 g/cm ³ or less, and even more preferably 1.9 g/cm ³ or less, since excellent volumetric energy density of the secondary battery can be obtained.

The d002 value of the particles of the present invention is preferably 3.37 Å or less, and more preferably 3.36 Å or less, since graphite is highly crystalline and sufficient charge and discharge capacity can be obtained.

The Lc of the particles of the present invention is preferably 900 Å or more, and more preferably 950 Å or more, since graphite is highly crystalline and sufficient charge and discharge capacity can be obtained.

The Raman R value of the particles of the present invention is preferably 0.05 or more, more preferably 0.1 or more, since it can have excellent conductivity. The Raman R value of the particles of the present invention is preferably 0.4 or less, and more preferably 0.35 or less, since a high capacity can be obtained.

### (Method for producing the particles of the present invention)

The method for producing the particles of the present invention is preferably a method in which the graphite (A) and the particles (B) are composited, since the battery output can be improved. The method for producing the particles of the present invention is more preferably a method in which the graphite (A) and the particles (B) are spheroidized and composited, since the life of the secondary battery can be extended. By subjecting the graphite (A) and the particles (B) to spheroidization treatment and forming a composite, the particles in which the particle (B) is encapsulated in the graphite (A) can be obtained.

That is, one embodiment of the present invention is a method for producing the particles including a step of encapsulating the particle (B) containing at least one selected from the group consisting of a tantalum compound and a cerium compound in the graphite (A).

Furthermore, this method preferably further includes a step of coating the surface of the particle (B1) containing a silicon element with at least one selected from the group consisting of a tantalum compound and a cerium compound.

Since particles having excellent uniformity can be obtained, the method of spheroidizing the graphite (A) and the particles (B) to form a composite is preferably a method that includes the following steps (1) and (2).
Step (1): A step of mixing the graphite (A) and the particle (B)
Step (2): A step of applying mechanical energy to the mixture obtained in the step (1) to spheroidize it.

### (Step (1))

Step (1) is a step of mixing the graphite (A) and the particle (B).

As a mixing method, a known mixing method can be used.

### (Step (2))

Step (2) is a step in which mechanical energy is applied to the mixture obtained in the step (1) to spheroidize it.

Examples of mechanical energy include impact, compression, friction, shear force, and the like. These mechanical energies may be used alone or in combination of two or more.

The device that provides mechanical energy is preferably a hybridization system. The hybridization system has a rotor having multiple blades that applies mechanical energy of impact, compression, friction, shear force, and the like, and the rotation of the rotor generates a large air flow. As a result, a large centrifugal force is applied to the graphite (A) in the mixture, so that the graphite (A) interacts with each other, and collides with the wall or blade, whereby the composite of the graphite (A) and the particle (B) proceeds efficiently.

The peripheral speed of the rotor is preferably 30 m/sec or more, more preferably 40 m/sec or more, and even more preferably 50 m/sec or more, since the efficiency of compositing is excellent. The peripheral speed of the rotor is preferably 120 m/sec or less, more preferably 110 m/sec or less, and even more preferably 100 m/sec or less, since heat generation due to collision energy can be suppressed.

The rotation time of the rotor is preferably 0.5 minutes or more, more preferably 1 minute or more, and even more preferably 2 minutes or more, since the uniformity of compositing is excellent. The rotation time of the rotor is preferably 60 minutes or less, more preferably 30 minutes or less, and even more preferably 10 minutes or less, since a high capacity can be obtained.

A granulating agent may be added to the mixture as necessary.

A known granulating agent can be used as the granulating agent.

The method for producing the particles of the present invention preferably further includes the following step (3) because the specific surface area of the particles can be easily controlled. Through the step (3), the particles of the present invention having a carbonaceous material on the surface are obtained.
Step (3): A step of coating the surface of the particles (hereinafter sometimes referred to as "particles (C) ") containing the graphite (A) and the particle (B) with a carbonaceous material.

Examples of the carbonaceous materials include amorphous carbonaceous materials and graphitized materials, but amorphous carbonaceous materials are preferable because they have excellent acceptability for lithium ions.

Amorphous carbonaceous material refers to carbon having a d002 value of 0.340 nm or more.

Graphite material refers to graphite having a d002 value of less than 0.340 nm.

A preferable method for coating the surface of the particles (C) with an amorphous carbonaceous material or a graphite material is a method comprising a step of mixing the particles with an amorphous carbonaceous material precursor or a graphite material precursor, and a step of heating the mixture in a non-oxidizing amorphous to convert the amorphous carbonaceous material precursor into amorphous carbon or the graphite material precursor into graphite, because coating efficiency is excellent.

Examples of the method of mixing the particles (C) and the amorphous carbonaceous material precursor or the graphite material precursor include a method of mixing the particles (C) and the amorphous carbonaceous material precursor or the graphite material precursor using a mixer or a kneader, and a method in which the particles (C) are added to a solution in which an amorphous carbonaceous material precursor or a graphite material precursor is dissolved and then the solvent is removed. Among these methods, the method of mixing the particles (C) and an amorphous carbonaceous material precursor or a graphite material precursor using a mixer or a kneader is preferable, because it can efficiently reduce micropores of 1 nm to 4 nm.

The atmosphere during heating after mixing is not particularly limited as long as it is a non-oxidizing atmosphere, but nitrogen, argon, and carbon dioxide are preferable, and nitrogen is more preferable, since the secondary battery having excellent initial efficiency can be obtained.

The oxygen concentration of the non-oxidizing atmosphere is preferably 1% by volume or less, and more preferably 0.1% by volume or less, since the secondary battery having excellent initial efficiency can be obtained.

The heating temperature differs between amorphous carbonization of the amorphous carbonaceous material precursor and graphitization of the graphite material precursor.

The heating temperature for amorphous carbonizing the amorphous carbonaceous material precursor is not particularly limited as long as it does not reach a crystal structure equivalent to that of graphite, but is preferably 500°C or higher, more preferably 600°C or higher, and even more preferably 700°C or higher, and preferably 2000°C or lower, more preferably 1800°C or lower, and even more preferably 1600°C or lower.

The heating temperature for graphitizing the graphite material precursor is not particularly limited as long as it reaches a crystal structure equivalent to that of graphite, but is preferably 2100°C or higher, more preferably 2500°C or higher, and even more preferably 2700°C or higher, and preferably 3300°C or lower, more preferably 3200°C or lower, and even more preferably 3100°C or lower.

The heating time is preferably 0.1 hour or more, and more preferably 1 hour or more, since the degree of graphitization is suitable for a secondary battery. The heating time is preferably 1000 hours or less, and more preferably 100 hours or less, since byproducts due to the reaction between the graphite (A) and the particle (B) can be suppressed.

Examples of the amorphous carbonaceous material precursor and the graphite material precursor include tar, pitch, aromatic hydrocarbons such as naphthalene, anthracene, and the like, and thermoplastic resins such as phenol resin, polyvinyl alcohol resin, and the like. These precursors may be used alone or in combination of two or more. Among these precursors, tar, pitch, and aromatic hydrocarbons are preferable, and those having a residual carbon content of 50% or more are more preferable, and those having a residual carbon content of 60% or more are even more preferable, because they can easily develop a carbon structures and can be coated with a small amount.

The ash content in the amorphous carbonaceous material precursor or the graphite material precursor is preferably 0.00001% by mass or more, and preferably 1% by mass or less, more preferably 0.5% by mass or less, and even more preferably 0.1% by mass or less based of 100% by mass of the amorphous carbonaceous material precursor or the graphite material precursor, since the life of the secondary battery can be extended.

The metal impurity content in the amorphous carbonaceous material precursor or the graphite material precursor is preferably 0.1ppm by mass or more, based on 100% by mass of the amorphous carbonaceous material precursor or the graphite material precursor, and preferably 1000 ppm by mass or less, more preferably 500 ppm by mass or less, and even more preferably 100 ppm by mass or less, since the life of the secondary battery can be extended.

In this specification, the metal impurity content is the value obtained by dividing a total content of Fe, Al, Si, and Ca in the amorphous carbonaceous material precursor or the graphite material precursor by a residual carbon content.

Qi (quinoline insoluble content) in the amorphous carbonaceous material precursor and the graphite material precursor is preferably 5% by mass or less, and more preferably 3% by mass or less, based on 100% by mass of the amorphous carbonaceous material precursor or the graphite material precursor, since the life of the secondary battery can be extended.

The particles of the present invention may be pulverized, crushed, and classified as necessary in order to adjust the volume-average particle size to a desired range.

For pulverization, crushing, and classification, known methods can be used.

### (Producing method of negative electrode)

The method for producing a negative electrode of the present invention includes a step of applying the particles of the present invention onto a current collector.

The negative electrode produced by the negative electrode producing method of the present invention (hereinafter sometimes referred to as "the negative electrode of the present invention") includes a current collector and an active material layer formed on the current collector, and the active material layer contains the particles of the present invention. The particles of the present invention have the effect of functioning as a negative electrode active material.

The method for producing the negative electrode of the present invention is not particularly limited as long as an active material layer can be formed on the current collector, but a method of applying a slurry containing the particles of the present invention and a binder on to a current collector and drying it is preferable, because a negative electrode having excellent uniformity can be formed. The slurry may further contain a thickener.

After applying a slurry containing the particles of the present invention and a binder onto a current collector and drying it, it is preferable to apply pressure to increase the density of the active material layer formed on the current collector, thereby increasing the battery capacity per unit volume of the active material layer.

The density of the active material layer is preferably 1.5 g/cm³ or more, and more preferably 1.6 g/cm³ or more, since decrease of the battery capacity per unit volume can be suppressed. The density of the active material layer is preferably 2.0 g/cm³ or less, and more preferably 1.9 g/cm³ or less, since decrease of rate characteristics can be suppressed.

### (Method for manufacturing secondary battery)

The method for manufacturing a secondary battery of the present invention is a method for manufacturing a secondary battery comprising a positive electrode, a negative electrode, and an electrolyte, wherein the negative electrode is the negative electrode of the present invention obtained by the producing method of the present invention.

The positive electrode and the negative electrode of the present invention are preferably capable of intercalating and deintercalating lithium ions.

### (Positive electrode)

A known positive electrode can be used as the positive electrode.

### (Electrolytes)

A known electrolyte can be used as the electrolyte.

### (Separator)

It is preferable that the secondary battery has a separator interposed between the positive electrode and the negative electrode.

A known separator can be used as the separator.

### (Application)

Since the particles of the present invention have an excellent effect of improving cycle characteristics of secondary batteries, they can be suitably used as an active material for a negative electrode of a secondary battery, and are more suitably used as an active material for a negative electrode of a non-aqueous secondary battery. It can be particularly suitably used as an active material for a negative electrode of a lithium ion secondary battery. Example

Hereinafter, the present invention will be explained in more detail with reference to Examples. The present invention is not limited to the description of the following Examples unless it departs from the gist thereof.

### (Method for measuring volume-average particle size)

0.01 g of the sample was suspended in 10 mL of a 0.2% by mass aqueous solution of polyoxyethylene sorbitan monolaurate (trade name "Tween 20"), which is a surfactant, introduced into a laser diffraction/scattering particle size distribution analyzer (model name "LA-920", manufactured by Horiba, Ltd.), and irradiated with 28kHz ultrasonic waves at an output of 60W for 1 minute. The volume-based median diameter of the measurement device was measured, and the volume-based median diameter was defined as the volume-average particle size.

### (Method for measuring d90)

The particle size corresponding to 90% cumulatively from the small particle side in the particle size distribution obtained by measuring the volume-average particle size was defined as d90.

### (Method for measuring specific surface area)

Using a specific surface area measuring device (model name "MacSorb HM Model-1210", manufactured by Mountec Co., Ltd.), the sample was pretreated by heating to 150°C under nitrogen flow, and then cooled to liquid nitrogen temperature. Using a nitrogen-helium mixed gas that was accurately adjusted so that the relative pressure of nitrogen to atmospheric pressure was 0.3, the specific surface area was measured by the nitrogen adsorption BET one-point method using a gas flow method.

### (Method for measuring tap density)

Using a powder density measuring device (model name "Tap Denser KYT-5000", manufactured by Seishin Enterprise Co., Ltd.), the sample was dropped through a sieve having an opening of 300 µm into a cylindrical tap cell having a diameter of 1.2 cm and a volumetric capacity of 20 cm³. After the cell was fully filled, tapping with a stroke length of 10 mm was performed 1000 times, and the density value calculated from the volume at that time and the mass of the sample was defined as the tap density.

### (Method for measuring of Raman R value)

Raman spectrum analysis using argon ion laser light was performed using "LabRAM-HR Evolution" manufactured by Horiba, Ltd. In this Raman spectrum analysis, the intensity IA of the peak PA that occurs around 1580cm⁻¹ and the intensity IB of the peak PB that occurs around 1360cm⁻¹ were measured, and the intensity ratio = IB/IA was determined.

To prepare the sample, the powder was filled into a cell by gravity. While irradiating the sample surface within the cell with argon ion laser light, the cell was rotated in a plane perpendicular to the laser beam. The measurement conditions were as follows.
Argon ion laser light wavelength: 514.5nm
Laser power on sample: 25mW
Resolution: 4cm⁻¹
Measurement range: 1100cm⁻¹ to 1730cm⁻¹
Peak intensity measurement, peak half-width measurement: background processing, smoothing processing (5 points of convolution using simple average)

### (Method for measuring a tantalum element content and the type of a tantalum oxide)

Regarding particles (B-1) and (B-2) obtained in Production Examples 2 and 3, the content of a tantalum element and the type of a tantalum oxide were confirmed by X-ray photoelectron spectroscopy (XPS).

The sample embedded in indium metal was measured using an X-ray photoelectron spectrometer (model name: "KRATOS ULTRA2", manufactured Shimadzu Corporation) under the following measurement conditions.
X-ray source: monochromatic Al-Kα
Output: 15kV to 225W
Band electron neutralization: Filament Current
   Filament bias
Charge balance: 0.43V, 1V, 4V
Pass energy: wide spectrum 160eV
   narrow spectrum 20eV
Measurement area: 700µm x 300um
Removal angle: 90°
Energy correction Si: 2p = 103.5eV (SiO₂)

### (Measurement method of a cerium element content and type of a cerium compound)

Regarding particles (B-3) to (B-5) obtained in Examples 3 to 5, the content of a cerium element and the type of a cerium compound were confirmed by X-ray photoelectron spectroscopy (XPS).

The sample embedded in indium metal was measured using an X-ray photoelectron spectrometer (model name: "KRATOS ULTRA2", manufactured Shimadzu Corporation) under the following measurement conditions.
X-ray source: monochromatic Al-Kα
Output: 15kV to 225W
Band electron neutralization: Filament Current
   Filament bias
Charge balance: 0.43V, 1V, 4V
Pass energy: wide spectrum 160eV
   narrow spectrum 20eV
Measurement area: 700µm × 300µm
Removal angle: 90°
Energy correction Si: 2p = 103.5eV (SiO₂)

### (Method for measuring initial capacity, capacity retention rate, and charge/discharge efficiency)

100 parts by mass of the particles obtained in Examples and Comparative Examples, 2.6 parts by mass of acetylene black, 1.6 parts by mass of carboxymethyl cellulose, and 3.3 parts by mass of a 48% by mass aqueous dispersion of styrene-butadiene rubber were added to a hybridization mixer to form a slurry.

The obtained slurry was applied onto a copper foil having a thickness of 20 µm serving as a current collector so as to have a basis weight of 7 to 8 mg/cm ² and was dried. Thereafter, the active material layer was roll pressed using a 250 mϕ roll press equipped with a load cell so that the density of the active material layer was 1.6 to 1.7 g/cm³, punched out into a circular shape having a diameter of 12.5 mm, and vacuum dried at 90°C for 8 hours to obtain a negative electrode for evaluation.

A battery for a charge/discharge test was manufactured by stacking this negative electrode and a Li foil as a counter electrode with a separator impregnated with an electrolytic solution interposed therebetween. The electrolytic solution used was a mixture of ethylene carbonate/ethyl methyl carbonate/monofluoroethylene carbonate=30/60/10 (volume ratio) in which LiPF₆ was dissolved at a concentration of 1 mol/liter.

First, the battery for the charge/discharge test was charged to 5 mV at a current density of 0.08 mA/cm², and further charged at a constant voltage of 5 mV until the current value reached 0.03 mA, to dope with lithium into the negative electrode. After doping with lithium into the negative electrode, the battery was discharged to 1.5 V at a current density of 0.2 mA/cm² (initial first cycle). Thereafter, charging and discharging were repeated four times under the same conditions as above, except that the current density during charging was 0.2 mA/cm² and the current density during discharging was 0.3 mA/cm² (initial 2nd cycle to initial 5th cycle). "Charging" refers to passing a current in a direction in which lithium is doped into the negative electrode for evaluation, and "discharging" refers to passing a current in a direction in which lithium is dedoped from the negative electrode for evaluation.

The initial discharge capacity (mAh/g) was determined as follows. First, the mass of the negative electrode active material was determined by subtracting the mass of a copper foil punched to the same area as the negative electrode from the mass of the negative electrode. The initial discharge capacity per mass was determined by dividing the initial 5th cycle discharge capacity by this mass of the negative electrode active material.

After the initial charging and discharging, the battery was charged at a current density of 1 mA/cm² until the voltage reached 5 mV, and then charged at a constant voltage of 5 mV until the current value reached 0.1 mA/cm², thereby doping with a lithium into the negative electrode. After doping, the battery was discharged at a current density of 1 mA/cm² until the voltage of the battery reached 1.5 v (first cycle). Thereafter, charging and discharging were repeated 9 times under the same conditions as the first cycle (2nd cycle to 10th cycle).

The capacity retention rate (%) at the 10th cycle was calculated using the following formula (1). 10th cycle capacity retention rate (%) = {10th cycle discharge capacity (mAh) / 1st cycle charge capacity (mAh)} x 100

The charge/discharge efficiency (%) at the 10th cycle was calculated using the following formula (2). 10th cycle charge/discharge efficiency (%) = {10th cycle discharge capacity (mAh)/10th cycle charge capacity (mAh)} x 100

### [Production Example 1: Production of a particle (B1-1) containing a silicon element]

A mixture of silicon dioxide powder and metal silicon powder was heated to 1000°C or higher under reduced pressure, the generated SiOx gas was cooled and precipitated, and then the SiOx powder obtained by passing through a coarse pulverization process was dry-pulverized using a ball mill to produce a particle (B1-1) containing a silicon element.

### [Production Example 2: Production of a particle (B-1)]

3.6 parts by mass of tantalum (V) ethoxide was added to a mixed solution of 1.6 parts by mass of acetic acid and 65.4 parts by mass of ethanol, and the mixture was stirred at 25°C for 30 minutes. After stirring, a mixed solution of 8.6 parts by mass of acetic acid and 51.4 parts by mass of ethanol was added dropwise, and a mixed solution of 4.4 parts by mass of diethanolamine and 40 parts by mass of ethanol was added dropwise, and the mixture was stirred at 25°C for 30 minutes to obtain a sol solution of a tantalum oxide.

The obtained sol solution of a tantalum oxide was added dropwise to a suspension of 100 parts by mass of the particle (B1-1) containing a silicon element dispersed in 124.4 parts by mass of ethanol, and stirred at 25°C for 60 minutes. After stirring, the solvent was distilled off under reduced pressure at 60°C to obtain a powder.

The obtained powder was heated at 120°C for 6 hours, and further heated at 500°C for 1 hour in an air atmosphere. Thereafter, the obtained powder was crushed with an agate to obtain a particle (B-1) containing a tantalum oxide on the surface of the particle (B1-1) containing a silicon element.

The obtained particle (B-1) contained 13 atomic parts of a tantalum element per 100 atomic parts of a silicon element, and it was confirmed that the tantalum oxide contained tantalum pentoxide.

### [Production Example 3: Production of a particle (B-2)]

A particle (B-2) was produced in the same manner as in Production Example 2, except that heating at 500°C for 1 hour in an air atmosphere was changed to heating at 500°C for 1 hour in a nitrogen atmosphere.

The obtained particle (B-2) contained 11 atomic parts of a tantalum element per 100 atomic parts of a silicon element, and it was confirmed that the tantalum oxide contained tantalum pentoxide.

### [Example 1]

88.5% by mass of flaky graphite (A-1) (volume-average particle size: 11.1 µm, d90: 21.1 µm, specific surface area: 9.9 m²/g, tap density: 0.44 g/cm³, Raman R value: 0.28 ) and 11.5% by mass of the particle (B-1) were mixed, a granulating agent was added thereto, and the mixture was stirred and mixed using a stirring granulator. The obtained mixture was put into a hybridization system, and subjected to mechanical granulation and spheroidization for 5 minutes at a rotor circumferential speed of 85 m/sec. Thereafter, the granulating agent was removed by heat treatment to obtain spherical composite particles.

The obtained spherical composite particles and pitch (ash content: 0.02% by mass, metal impurity content: 20 ppm by mass, Qi: 1% by mass) were mixed and heat treated at 1000 °C in an inert gas to obtain a heated product. The obtained heated product was crushed and classified to obtain particles containing graphite (A-1) and the particle (B-1) .

The evaluation results of the obtained particles are shown in Table 1.

### [Example 2]

Particles containing graphite (A-1) and the particle (B-2) were obtained by performing the same operation as in Example 1, except that the particle (B-1) was changed to the particle (B-2).

The evaluation results of the obtained particles are shown in Table 1.

### [Comparative Example 1]

Particles containing graphite (A-1) and the particle (B1-1) were obtained by performing the same operation as in Example 1, except that the particle (B-1) was changed to the particle (B1-1).

The evaluation results of the obtained particles are shown in Table 1.

**[Table 1]**

| | Initial Capacity [mAh/g] | Capacity Retention Rate [%] | Charge/Discharge Efficiency [%] |
|---|---|---|---|
| Example 1 | 444 | 97.81 | 99.74 |
| Example2 | 438 | 97.39 | 99.70 |
| Comparative Example1 | 441 | 97.18 | 99.67 |

As can be seen from Table 1, in Examples 1 and 2, compared to Comparative Example 1, no significant decrease in the initial capacity of the negative electrode was confirmed, and improvements in the capacity retention rate and charge/discharge efficiency at the 10th cycle were confirmed. This is considered to be because the tantalum oxide contained in the particle (B) suppressed the decomposition reaction of the electrolytic solution without affecting the capacity.

### [Example 3]

3.6 parts by mass of cerium (IV) ethoxide was added to a mixed solution of 1.6 parts by mass of acetic acid and 65.4 parts by mass of ethanol, and the mixture was stirred at 25°C for 30 minutes. After stirring, a mixed solution of 8.6 parts by mass of acetic acid and 51.4 parts by mass of ethanol was added dropwise, and a mixed solution of 4.4 parts by mass of diethanolamine and 40 parts by mass of ethanol was added dropwise, and the mixture was stirred at 25°C for 30 minutes to obtain a sol solution of a cerium compound.

The obtained sol solution of a cerium compound was added dropwise to a suspension of 100 parts by mass of the particle (B1-1) containing a silicon element dispersed in 124.4 parts by mass of ethanol, and stirred at 25°C for 60 minutes. After stirring, the solvent was distilled off under reduced pressure at 60°C to obtain a powder.

The obtained powder was heated at 120°C for 6 hours, and further heated at 500°C for 1 hour in an air atmosphere. Thereafter, the obtained powder was crushed with an agate to obtain a particle (B-3) containing a cerium compound on the surface of the particle (B1-1) containing a silicon element.

The obtained particle (B-3) contained 2.2 atomic parts of a cerium element per 100 atomic parts of a silicon element, and it was confirmed that the cerium compound contained cerium (IV) oxide.

The evaluation results of the obtained particle (B-3) are shown in Table 2.

### [Example 4]

A particle (B-4) was prepared in the same manner as in Example 1, except that heating at 500°C for 1 hour in an air atmosphere was changed to heating at 500°C for 1 hour in a nitrogen atmosphere.

The evaluation results of the obtained particle are shown in Table 2.

### [Example 5]

A particle (B-5) was obtained in the same manner as in Example 4, except that 3.6 parts by mass of cerium (IV) ethoxide was changed to 7.2 parts by mass of cerium (IV) ethoxide.

The obtained particle (B-5) contained 4.2 parts by mass of a cerium element per 100 parts by mass of a silicon element, and it was confirmed that the cerium compound contained cerium (IV) oxide.

The evaluation results of the obtained particle are shown in Table 2.

### [Comparative Example 2]

The particle (B1-1) containing a silicon element was used as it was. Table 2 shows the evaluation results of the particle (B1-1) containing a silicon element.

**[Table 2]**

| | Initial Capacity [mAh/g] | Capacity Retention Rate [%] |
|---|---|---|
| Example3 | 1179 | 97.61 |
| Example4 | 1235 | 94.70 |
| Examples | 1198 | 94.81 |
| Comparative Example1 | 1373 | 85.80 |

### [Example 6]

88.5% by mass of flaky graphite (A-1) (volume-average particle size: 11.1 um, d90: 21.1 um, specific surface area: 9.9 m²/g, tap density: 0.44 g/cm³, Raman R value: 0.28 ) and 11.5% by mass of the particle (B-3) obtained in Example 3 were mixed, a granulating agent was added thereto, and the mixture was stirred and mixed using a stirring granulator. The obtained mixture was put into a hybridization system, and subjected to mechanical granulation and spheroidization for 5 minutes at a rotor circumferential speed of 85 m/sec. Thereafter, the granulating agent was removed by heat treatment to obtain spherical composite particles.

The obtained spherical composite particles and pitch (ash content: 0.02% by mass, metal impurity content: 20 ppm by mass, Qi: 1% by mass) were mixed and heat treated at 1000 °C in an inert gas to obtain a heated product. The obtained heated product was crushed and classified to obtain particles containing the graphite (A-1) and the particle (B-3).

The evaluation results of the obtained particles are shown in Table 3.

### [Comparative Example 3]

Particles containing graphite (A-1) and the particle (B1-1) were obtained by performing the same operation as in Example 6, except that the particle (B-3) was changed to the particle (B1-1).

The evaluation results of the obtained particles are shown in Table 3.

**[Table 3]**

| | Initial Capacity [mAh/g] | Capacity Retention Rate [%] | Charge/Discharge Efficiency [%] |
|---|---|---|---|
| Example6 | 432 | 97.88 | 99.70 |
| Comparative Example3 | 441 | 97.18 | 99.67 |

As can be seen from Table 2, in Examples 3 to 5, compared to Comparative Example 2, no significant decrease in the initial capacity of the negative electrode was observed, and an improvement in the capacity retention rate at the 25th cycle was confirmed.

As can be seen from Table 3, in Example 6, compared to Comparative Example 3, no significant decrease in the initial capacity of the negative electrode was confirmed, and improvements in the capacity retention rate and charge/discharge efficiency at the 10th cycle were confirmed. This is considered to be because the cerium compound contained in the particle (B) suppressed the decomposition reaction of the electrolytic solution without affecting the capacity.

Although the present invention has been described in detail using specific embodiments, it will be apparent to those skilled in the art that various changes can be made without departing from the spirit and scope of the present invention.

This application is based on Japanese Patent Application No. 2022-045580 and Japanese Patent Application No. 2022-045581 filed on March 22, 2022, and the entire of which are incorporated herein by reference.

### Industrial Applicability

Since the particles of the present invention can provide a secondary battery having excellent cycle characteristics as a negative electrode material for a secondary battery, they can be suitably used as an active material for a negative electrode of a secondary battery, more suitably used as an active material for a negative electrode of a non-aqueous secondary batteries, and even more suitably used as an active material for a negative electrode of a lithium ion secondary.

## Claims

1. Particles comprising graphite (A) and a particle (B) containing at least one selected from the group consisting of a tantalum compound and a cerium compound,
wherein the particle (B) is encapsulated in the graphite (A).

2. The particles according to claim 1, wherein the graphite (A) has a Raman R value of 0.1 to 0.7.

3. The particles according to claim 1 or 2, wherein the particle (B) further contains a silicon element.

4. The particles according to claim 2, wherein the particle (B) is a particle (B1) containing a silicon element having a surface coated with at least one selected from the group consisting of a tantalum compound and a cerium compound.

5. The particles according to any one of claims 1 to 4, wherein the tantalum compound contains tantalum pentoxide.

6. The particles according to any one of claims 1 to 5, wherein the cerium compound contains cerium (IV) oxide.

7. The particles according to any one of claims 1 to 6, wherein the particles (B) have a volume-average particle size of 0.2 µm to 0.8 µm.

8. The particles according to any one of claims 1 to 7, having a carbonaceous material on the surface.

9. The particles according to any one of claims 1 to 8, wherein the content of the graphite (A) is 60% by mass to 95% by mass, and the content of the particle (B) is 5% by mass to 40% by mass in the total of 100% by mass of the graphite (A) and the particle (B).

10. A method for producing particles, comprising a step of encapsulating a particle (B) in graphite (A), the particle (B) containing at least one selected from the group consisting of a tantalum compound and a cerium compound.

11. The method for producing particles according to claim 10, wherein the graphite (A) has a Raman R value of 0.1 to 0.7.

12. The method for producing particles according to claim 10 or 11, further comprising a step of coating a surface of a particle (B1) containing a silicon element with at least one selected from the group consisting of a tantalum compound and a cerium compound.

13. Particles comprising a particle (B) containing a cerium compound,
wherein the particle (B) is a particle (B1) containing a silicon element, and the particle (B1) has a surface coated with a cerium compound.

14. The particles according to claim 13, wherein the particle (B) has a volume-average particle size of 0.2 µm to 0.8 um.

15. A method for producing a negative electrode, having a step of applying the particles according to any one of claims 1 to 9 and 13 to 14 onto a current collector.

16. A method for manufacturing a secondary battery including a positive electrode, a negative electrode, and an electrolyte,
wherein the negative electrode is obtained by the producing method according to claim 15.
